# EUROPEAN PATENT APPLICATION

(11) **EP 2 028 460 A1**
(43) Date of publication of application: **25.02.2009**
(21) Application number: 07075712.5
(22) Date of filing: 22.08.2007
(51) Int. Cl.: G01G 21/23, G01G 19/12

(54) **weighing module**

(71) Applicant: Van de Vliet, Ronny, 2300 Turnhout (BE)
(72) Inventor: Van de Vliet, Ronny, 2300 Turnhout (BE)
(74) Representative: Donné, Eddy

(57) **Abstract**

The invention concerns a weighing system in which use is made of at least one load cell which is fitted with a known type of force introduction element, e.g. a load button and a load receptor, via which, in addition to the vertical force to be registered, the horizontal forces are also transmitted by a special housing round the 'head' of the load cell and which, through the combined effect of this housing and the force introduction elements (e.g. load button), is ideally suited to constructing a mobile weighing system using these elements.

## Description

This invention relates to a weighing module for weighing loads, in which use is made of at least one load cell, which is connected, firstly to a frame and secondly to an auxiliary frame on which the load to be weighed is placed. The auxiliary frame is also called the load carrier.

The load cell or load cells measure the deflection, for example through the use of resistance strain gauges, caused by the presence of the weight to be weighed, and convert this deflection into a proportionate change in resistance or tension.

This is usually amplified and displayed in analogue and/or digital form on an indicator.

Different types of load cells are known, such as those known by the technical terms 'bending beam' or 'shear beam', or a double bending beam or so-called 'ring load cell'.

The accuracy of said load cells is greatly influenced by the centring of the force with respect to the centre point of the load cell's force recording plate, the so-called 'force introduction hole'.

The present invention concerns a weighing module with known force introduction elements, but in which a certain horizontal force transmission is provided which makes the element particularly suitable for weighing systems which are used in rough conditions, for example in mobile applications where substantial longitudinal and transverse forces arise due to the acceleration and braking of the mobile device and/or because of gravitational acceleration.

These longitudinal and transverse forces which are communicated to the weighing element must be conducted away from the weighing element's weighing part or load carrier to its non-weighing part or frame.

The version described in more detail here is a variant on a ball and pan design, in which the ball is replaced by a fixed pin with a spherical head known in technical terms as a 'load button'.

One of the ways of obtaining proper accuracy makes use of a load button with a spherical head at the centre of the force recording plate, the force introduction hole. This ensures a good vertical introduction of the force to be measured.

With a view to demonstrating the invention's characteristics more clearly, in what follows, by way of example and without any limitative intention, two preferred embodiments are described, with reference to the accompanying drawings, in which:
figure 1 gives a view of a weighing module according to the invention;
figure 2 gives a view according to arrow F2 in figure 1;
figure 3 shows on a larger scale the part indicated by arrow F3 in figure 2;
figure 4 shows an alternative embodiment of a weighing module according to the invention.

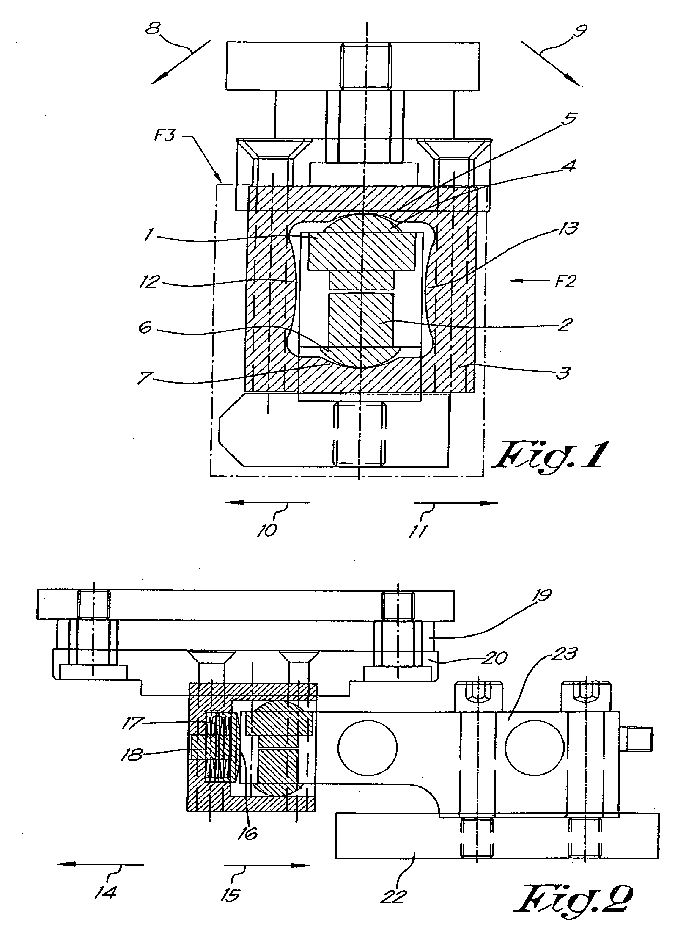

Figures 1 to 3 show a weighing module fitted with load buttons 1 and 2 and a load receptor 3.

The load button 1 is fitted with a first spherical surface 4 with radius of curvature r, while the load receptor 3 near the first spherical surface 4 of the load button 1 is fitted with a matching concave surface 5 with radius of curvature r1, the purpose of the foregoing being to transmit the forces to be measured with the necessary freedom of movement and centring with respect to the force introduction hole.

The vertical force which sometimes arises in the opposite direction to the force to be measured is transmitted via load button 2 and load receptor 3.

The load button 2 is fitted with a spherical surface 6 with radius of curvature r2, while the load receptor 3 near the spherical surface 6 of the load button 2 is fitted with a matching concave surface 7 with radius of curvature r3, the purpose of the foregoing being to transmit the forces concerned with the necessary freedom of movement and centring with respect to the force introduction hole.

Through the suitable combination of dimensions and radii r and r2 of the load buttons 1 and 2, in proportion to the load cell 23, compared with the dimensions of the load receptor 3 with matching concave surfaces 5 and 6, with associated radii of curvature r1 and r3 to be chosen suitably, a weighing element arises whose load carrier - securing element (load receptor 3) has a relatively high degree of freedom.
- Indeed, in the first instance the rotational freedom in directions 8 and 9 of the load receptor 3 with respect to the load cell 23 is sufficiently extensive for a good force introduction to be obtained;
- Likewise, the displacement freedom in directions 10 and 11 of the load receptor 3 with respect to the load cell 23 can be adjusted as required by changing the radii r and r2 of the spherical surfaces 5 and 6 of the load buttons 1 and 2, and the radii r1 and r3 of the spherical surfaces 4 and 7 of the load receptor 3 in combination with the suitable choice of limit protrusions 12 and 13 with radius r3, plus the necessary play;
- The displacement freedom in directions 14 and 15 is also relatively great and can, if desired, be limited by a possible spherical pressure element 16 in combination with springs 17, possibly with a cup spring, and where possibly with an adjusting screw 1;
- the necessary freedom for good weighing results in combination with sufficient horizontal force transmission can be obtained by combining several 'weighing modules with integrated horizontal limitation' which are rotated 90° with respect to one another;
- the 'weighing module(s) with integrated horizontal limitation' can form a complete weighing system together with other types of modules, for example of the type described in EP.0.744.598, the matter of which is incorporated in this patent application.

With certain (very) flexible frames and/or load carriers, or with systems which are required to absorb very large shocks, an extra elastic element 19 can be used, regardless of the form, dimensions or material, which can be secured to the load receptor 3 either directly or using extra components 20.

In contrast to the weighing element described in EP 0.744.598, elastic material is not included between the load cell 23 and the similar-looking housing as load receptor 3 or between a tightly screwed element on the load cell 23 and the similar-looking housing as load receptor 3, but only (if necessary) between a part of the force introduction element, namely the load receptor 3 and the load carrier.

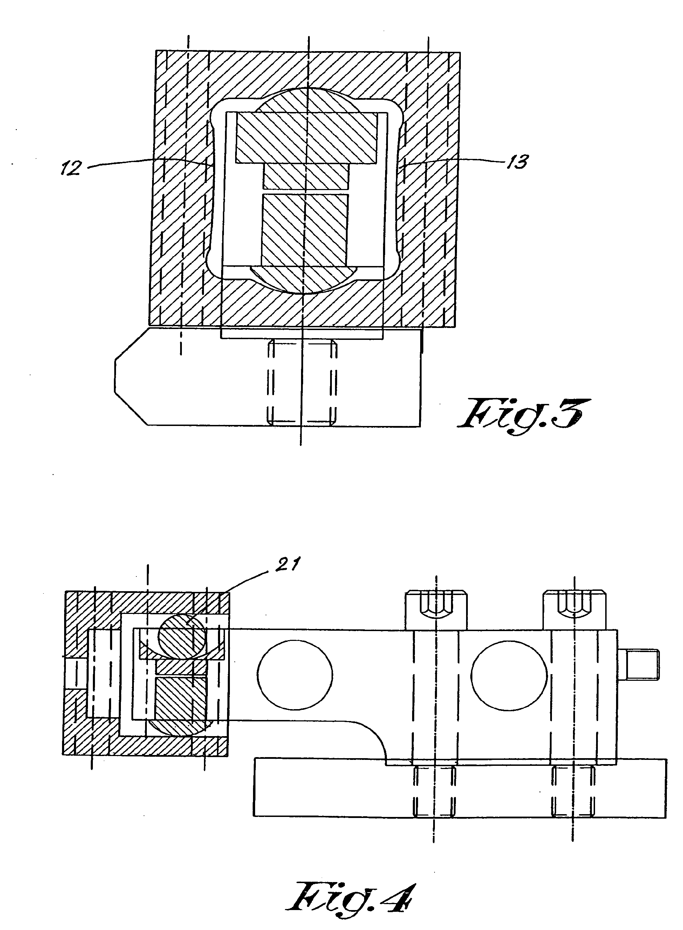

As shown in figure 4, in the above described weighing module the force introduction load button can be replaced by a ball bearing 21, or also by a 'rocker pin', or another type, though depending on the correct dimensioning of above described radii the operating principle remains identical.

The present invention is in no way restricted to the embodiments described by way of example and shown in the figures, and a weighing module according to the invention may be produced in various different forms and dimensions without going beyond the scope of the invention.

## Claims

1. A weighing module for weighing loads, which includes at least one load cell (23), fitted between a main frame (22) and an auxiliary frame (20) on which the load to be weighed is placed, said load cell (23) being fitted with one or more load buttons (1, 2) and a load receptor (3), which ensure a centred vertical force introduction, **characterised by** the fact that the design of the load buttons (1, 2) near the load receptor (3) and/or the design of the load receptor (3) near the load buttons (1, 2) is such that the horizontal forces are conducted away via the load cell (23) to the main frame (22).

2. A weighing module according to conclusion 1, **characterised by** the fact that the horizontal forces which work on the auxiliary frame (20) are transmitted via a combination of load buttons (1, 2) and load receptor (3) which contains the load button(s) or so-called head of the load cell in a housing or so-called 'box' opened on one side, and hence also ensures horizontal limitation.

3. A weighing module according to conclusion 1 or 2, **characterised by** the fact that the vertical force to be measured of the auxiliary frame (20) is transmitted via load receptor (3) to the load button (1), which transmits the force in a centred manner to the load cell (23) secured to the main frame (22).

4. A weighing module according to one or more of the foregoing conclusions 1 to 3, **characterised by** the fact that one load button (1) is fitted which transmits the vertical force in the direction to be measured in the centre of the load cell (23).

5. A weighing module according to one or more of the foregoing conclusions 1 to 4, **characterised by** the fact that the load button(s), provided suitable radii of curvature are used for the protrusions and/or cavities, can be replaced by other known types of force introduction element such as 'ball and cup' (21) and a self-centring pin, better known by the name 'rocker pin'.

6. A weighing module according to one or more of the foregoing conclusions 1 to 5, **characterised by** the fact that the load button(s) (1,2) (or equivalents) can be combined into a unit made of one part.

7. A weighing module according to one or more of the foregoing conclusions 1 to 6, **characterised by** the fact that a load receptor (3) is constructed from several parts which can be welded or assembled together, for example, such that in each case a 'box' opened on one side is formed.

8. A weighing module according to one or more of the foregoing conclusions 1 to 7, **characterised by** the fact that the load receptor (3) is fitted with extra horizontal limiting elements such as the spherical elements (12 and 13).

9. A weighing module according to one or more of the foregoing conclusions 1 to 8, **characterised by** the fact that the load receptor (3) is fitted with one or more pressure elements (16), if necessary in combination with (cup) springs and/or one or more limit bolts (18).

10. A weighing module according to one or more of the foregoing conclusions 1 to 9, **characterised by** the fact that the load receptor (3) is fitted with an elastic element (elastomer) which is secured to the load carrier, either directly or using an extra securing element (20).
